# EUROPÄISCHE PATENTSCHRIFT

(11) **EP 2 899 100 B1**
(45) Veröffentlichungstag und Bekanntmachung des Hinweises auf die Patenterteilung: **27.06.2018**
(21) Anmeldenummer: 14152705.1
(22) Anmeldetag: 27.01.2014
(51) Int. Cl.: B62D 27/02, B62D 29/00, B62D 23/00, F16B 11/00, F16L 13/11

(54) **Klebeverbindung und Klebeverfahren von zwei Hohlprofilen**
Bonded joint and bonding method of two hollow profiles
Liaison adhésive et procédé d'adhésion de deux profilés

(43) Veröffentlichungstag der Anmeldung: 29.07.2015
(73) Patentinhaber: MAGNA STEYR Fahrzeugtechnik AG & Co KG, 8041 Graz (AT)
(72) Erfinder: Erlacher, Manuel, 9545 Radenthein (AT); Rodler, Martin, 8160 Krottendorf (AT); Zachenegger, Harald, 8041 Graz (AT)
(74) Vertreter: Zangger, Bernd

(56) Entgegenhaltungen:
- EP-A1- 0 450 358
- WO-A2-02/02387
- WO-A2-2006/099648
- DE-A1-102010 044 116
- FR-A1- 2 569 817
- US-A- 5 716 155
- US-A1- 2003 196 753

## Beschreibung

### Gebiet der Erfindung

Die vorliegende Erfindung betrifft eine Steck- und Klebeverbindung eines ersten Hohlprofils mit einem zweiten Hohlprofil, wobei das zweite Hohlprofil in einem Überlappungsbereich vom ersten Hohlprofil umgeben ist und ein Steck- und Klebeverfahren zur Herstellung einer Steck- und Klebeverbindung zwischen einem ersten Hohlprofil und einem zweiten Hohlprofil, wobei das zweite Hohlprofil in einem Überlappungsbereich vom ersten Hohlprofil umgeben ist.

### Stand der Technik

Derartige Verbindungen zwischen zwei Hohlprofilen werden in verschiedensten Gebieten der Technik benötigt, beispielsweise um tragende Rahmenstrukturen zu bilden, beispielsweise in der sogenannten "Space-Frame" Bauweise von Karosserien im Automobilbau.

Zur Verbindung zweier Hohlprofile ist es bekannt eines der Hohlprofile in das andere zu stecken und im Überlappungsbereich die beiden Hohlprofile beispielsweise zu verschweißen, zu verclipsen, oder zu verkleben. Einfache Klebeverbindungen sind aber nur mäßig sicher, insbesondere bei ungenauer Passung oder Verzug der Hohlprofile.

Aus der DE 10 2006 044 799 A1 ist beispielsweise ein Karosseriemodul für einen Kraftwagen mit einer Mehrzahl von miteinander verbundenen Trägerprofilen, deren Trägerenden in Aufnahmeöffnungen von an das Karosseriemodul angrenzenden weiteren Trägerprofilen einzustecken sind bekannt, wobei die Trägerenden separaten Riegelelementen zugeordnet sind, welche verschiebbar am zugehörigen Trägerprofil gehalten sind und durch Verschieben gegenüber dem zugehörigen Trägerprofil in die jeweilige Aufnahmeöffnung des entsprechenden an das Karosseriemodul angrenzenden weiteren Trägerprofils einzustecken sind. Eine Klebeverbindung kann zwischen dem Riegelelement und der zugehörigen Aufnahmeöffnung vorgenommen sein.

Aus der FR 2 569 817 A1 ist ein Verbundrohr bekannt, dass durch ein Rohr aus Kunstfasern gebildet ist, das mit Klebstoff auf der Innenseite eines Metallrohrs angebracht sein kann. An einem Ende des Metallrohrs kann eine Hülse befestigt sein, mit einem verengten Abschnitt der ein Ringgehäuse zwischen sich selbst und dem Metallrohr bildet.

Die WO 2006/099648 A2 offenbart ein Kraftfahrzeug mit aus einem Unterteil und einem Oberteil bestehenden Körper, welche an Schnittstellen mit Vertiefungen miteinander verklebt sind, von denen einige im Wesentlichen in der Gürtellinie ausgebildet sind, wobei zur Ausbildung der Schnittstellen am Unterteil oben offene Taschen und Anschläge in Z-Richtung, und am Oberteil vertikal abwärts gerichtete Fortsätze vorgesehen sind, welche in die Taschen bis zu einer von den Anschlägen bestimmten Tiefe versenkbar sind, wobei die Taschen in X-Richtung und Y-Richtung weiter als die Fortsätze und zur Herstellung der Verbindung mit einem Kleber befüllt sind.

Aus der DE 10 2010 044116 A1 ist ein Verfahren zur Herstellung eines Bauteils aus mindestens 2 Bestandteilen bekannt, wobei in einem ersten Schritt auf eines oder beide der zu fügenden Bestandteile ein thermisch härtbarer, expandierbarer Klebefilm auf Epoxidbasis aufgetragen wird, in einem zweiten Schritt gegebenenfalls die Bestandteile zusammengefügt werden und in einem dritten Schritt die gefügten Bestandteil thermisch auf 60 bis 200°C erhitzt werden.

### Zusammenfassung der Erfindung

Es ist eine Aufgabe der Erfindung, eine Steck- und Klebeverbindung eines ersten Hohlprofils mit einem zweiten Hohlprofil anzugeben die einfach und kostengünstig herstellbar ist und doch zuverlässig ist und ein entsprechendes Steck- und Klebeverfahren.

Die Lösung der Aufgabe erfolgt durch eine Steck- und Klebeverbindung gemäß Anspruch 1.

Erfindungsgemäß ist also ein Hilfsbauteil, nämlich der Kern, innerhalb der beiden ineinander gesteckten Hohlprofile angeordnet, so dass zwischen dem Kern und dem inneren, zweiten Hohlprofil ein Abstand besteht, welcher durch einen expandierten Strukturkleber aufgefüllt wird. Bei hergestellter Verbindung zwischen den Bauteilen ist der Strukturkleber in einem expandiertem Zustand. Der Strukturkleber stellt daher zumindest zwischen dem Kern und dem inneren Hohlprofil eine Klebeverbindung her. Durch die Expansion des Strukturklebers ist diese Verbindung sowohl stoffschlüssig als auch kraftschlüssig und somit besonders zuverlässig. Der Kern ist in geeigneter Weise auch mit dem äußeren Hohlprofil verbunden, sodass letztlich auch das innere Hohlprofil mit dem äußeren Hohlprofil verbunden ist.

Erfindungsgemäß weist das zweite Hohlprofil im Überlappungsbereich Bohrungen auf und ist der expandierende Strukturkleber durch diese Bohrungen gequollen, tritt also durch diese Bohrungen des zweiten, inneren Hohlprofils. Dadurch wird ein verbesserter Halt zwischen Kern und zweitem Hohlprofil in vertikaler Richtung, also in Längsrichtung der Hohlprofile, erreicht. Erfindungsgemäß tritt der Strukturkleber so weit durch die Bohrungen, dass der expandierende Strukturkleber die Innenseite des ersten Hohlprofils kontaktiert und somit mit diesem verklebt. Besonders bevorzugt übt der Strukturkleber sogar einen Druck auf die Innenseite des ersten Hohlprofils aus, so dass diese auch kraftschlüssig über den Strukturkleber mit dem Kern und dem zweiten Hohlprofil verbunden ist.

Bevorzugt weist der Kern einen Basiskörper auf, wobei der Durchmesser des Basiskörpers dem Innendurchmesser des ersten Hohlprofils entspricht. Der Basiskörper hat dabei bevorzugt die selbe Form wie das erste Hohlprofil und steckt somit im ersten Hohlprofil.

Der Basiskörper kann insbesondere ein Durchgangsloch zum vertikalen Abfluss von Flüssigkeiten aufweisen.

In einer bevorzugten Ausführungsform kann am Basiskörper des Kerns ein Blähschaum angeordnet sein, der sich bevorzugt über die ganze Fläche des Basiskörpers erstrecken kann. Der Blähschaum kann dabei insbesondere auch das Durchgangsloch im Basiskörper verschließen und beispielsweise durch das Durchgangsloch dringen, so dass er auf beiden Seiten des Basiskörpers angeordnet ist. Der Blähschaum kann insbesondere ein Material sein dass noch stärker expandiert als der expandierende Strukturkleber und dient insbesondere der vertikalen Abdichtung im Bereich der Verbindung der beiden Hohlprofile um Fluiddichtheit und/oder eine verbesserte akustische Dämmung sicher zu stellen. Der Blähschaum kann sich dazu seitlich bis zur Innenseite des ersten Hohlprofils erstrecken.

Bevorzugt weist der Basiskörper Abstandsnasen auf um einen vorbestimmten vertikalen Abstand zwischen dem zweiten Hohlprofil und dem Basiskörper sicherzustellen, also einen Abstand normal auf die Fläche des Basiskörpers. Hierdurch können die Hohlprofile besser zueinander positioniert werden und dem Strukturkleber wird mehr Fläche zum Verkleben geboten, da er in Bereichen ohne Abstandsnasen durch den Raum zwischen Kern und zweitem Hohlprofil dringen kann.

Der Kern weist erfindungsgemäß einen Hals auf, wobei der Durchmesser des Halses geringer ist als der Innendurchmesser des zweiten Hohlprofils, und die Form des Halses bevorzugt der Form des zweiten Hohlprofils entspricht, sodass zwischen dem Hals und dem zweiten Hohlprofil ein Schacht gebildet wird. Dieser Schacht bildet den primären Aufnahmeraum für den expandierenden Strukturkleber.

Der Hals kann zu den Innenseiten des zweiten Hohlprofils parallel verlaufen oder sich, insbesondere mit ansteigendem Abstand von der Basisfläche des Kerns, konisch verjüngen.

Das erste Hohlprofil und das zweite Hohlprofil und der Hals des Kerns weisen erfindungsgemäß das selbe Profil auf, insbesondere ein rundes, rechteckiges oder quadratisches Profil.

Ein erfindungsgemäßes Steck- und Klebeverfahren zur Herstellung einer Steck- und Klebeverbindung zwischen einem ersten Hohlprofil und einem zweiten Hohlprofil ist in Anspruch 7 angegeben.

Der Kern wird hierdurch schon vor dem Einschieben in das Hohlprofil durch das Aufbringen von Strukturkleber vorbereitet.

Bevorzugt wird der expandierende Strukturkleber nach dem Einbringen des Kerns in das erste Hohlprofil und dem Einschieben des zweiten Hohlprofils mittels eines thermischen Vorganges oder einer chemischen Reaktion expandiert.

Erfindungsgemäß weist dabei das zweite Hohlprofil im Überlappungsbereich Bohrungen auf und der expandierende Strukturkleber quillt beim Expandieren durch die Bohrungen, insbesondere so, dass der expandierende Strukturkleber die Innenseite des ersten Hohlprofils kontaktiert und bevorzugt gegen diese Innenseite drückt.

Bevorzugt wird nach dem Anordnen des Kerns im ersten Hohlprofil und vor dem Expandieren des expandierenden Strukturklebers eine kathodische Tauchlackierung durchgeführt. Die Tauchlackierung kann insbesondere nach dem Anordnen des zweiten Hohlprofils zwischen Kern und erstem Hohlprofil erfolgen, in einer anderen Ausführungsform auch vor dem Anordnen des zweiten Hohlprofils.

Der Kern kann einen Basiskörper aufweisen, wobei der Durchmesser des Basiskörpers dem Innendurchmesser des ersten Hohlprofils entspricht. Auf diesen Basiskörper kann ein Blähschaum aufgebracht werden, der nach der Anordnung des Kerns im ersten Hohlprofil expandiert wird. Der Blähschaum kann zunächst ein eventuell vorhandenes Durchgangsloch im Basiskörper freilassen, so dass beispielsweise Flüssigkeiten während einer Tauchlackierung durch das Durchgangsloch und den Blähschaum abfließen können. Nach dem Expandieren des Blähschaums kann das Durchgangsloch durch den Blähschaum verschlossen werden.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer Klebeverbindung von der Seite (oben dargestellt) und entsprechend dem Schnitt A-A von oben (unten dargestellt) vor der Expansion des Strukturklebers.
- Fig. 2: ist eine Schnittansicht einer erfindungsgemäßen Klebeverbindung von der Seite (oben dargestellt) und entsprechend dem Schnitt A-A von oben (unten dargestellt) nach der Expansion des Strukturklebers.
- Fig. 3: ist eine Detaildarstellung des Bereichs um die Bohrungen gemäß Fig. 1 oben.
- Fig. 4: ist eine Detaildarstellung des Bereichs um die Bohrungen gemäß Fig. 2 oben.
- Fig. 5: ist eine Variante zu Fig. 1 mit einem Blähschaum, vor der Expansion des Strukturklebers und des Blähschaums.
- Fig. 6: ist eine Variante zu Fig. 2 mit einem Blähschaum, nach der Expansion des Strukturklebers und des Blähschaums.
- Fig. 7: ist eine Variante zu Fig. 1 mit rechteckigen Profilen.
- Fig. 8: ist eine Variante zu Fig. 2 mit rechteckigen Profilen.
- Fig. 9: ist eine weitere Variante einer erfindungsgemäßen Klebeverbindung von der Seite (oben dargestellt), entsprechend dem Schnitt A-A in Draufsicht (unten dargestellt).
- Fig. 10: ist eine Detaildarstellung zu Fig. 9 oben.
- Fig. 11: ist eine dreidimensionale Darstellung eines Kerns.

### Detaillierte Beschreibung der Erfindung

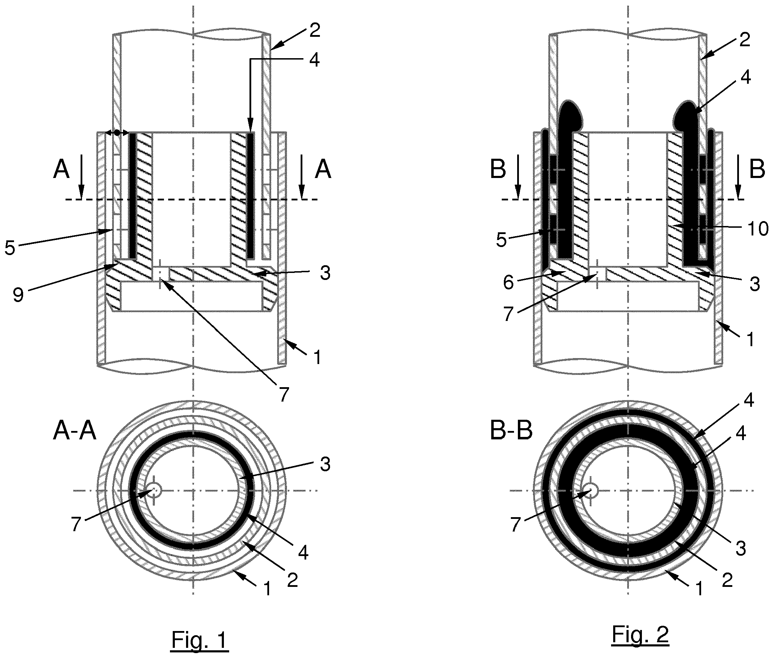

In den Fig. 1 und 2 ist eine erfindungsgemäße Klebeverbindung eines ersten, runden Hohlprofils 1 mit einem zweiten, runden Hohlprofil 2, wobei das zweite Hohlprofil 2 in einem Überlappungsbereich vom ersten Hohlprofil 1 umgeben ist, von der Seite (oben) und von oben (unten) vor der Expansion des Strukturklebers 4 (Fig. 1) und nach dessen Expansion (Fig. 2) dargestellt. Im Überlappungsbereich, innerhalb des ersten Hohlprofils 1 und des zweiten Hohlprofils 2, ist ein Kern 3 in das erste Hohlprofil 1 gesteckt. Zwischen dem Kern 3 und der Innenseite des zweiten Hohlprofils 2 ist ein expandierender Strukturkleber 4 angeordnet, der auf die Außenseite des Kerns 3 aufgebracht wurde. Das zweite Hohlprofil 2 weist im Überlappungsbereich Bohrungen 5 auf, so dass der Strukturkleber 4 im expandierten Zustand (Fig. 2) durch die Bohrungen 5 gequollen ist, wobei der expandierende Strukturkleber 4 auch gegen die Innenseite des ersten Hohlprofils 1 gepresst wird. Somit befindet sich der Strukturkleber 4 sowohl in einem Zwischenraum zwischen dem äußeren Hohlprofil 1 und dem inneren Hohlprofil 2, als auch zwischen dem inneren Hohlprofil 2 und dem Kern 3, sowie in den die Räume verbindenden Bohrungen 5.

Der Kern 3 weist einen Basiskörper 6 auf, wobei die Form und der Durchmesser des Basiskörpers 6 dem Innendurchmesser des ersten Hohlprofils 1 entspricht. Der Basiskörper 6 bildet somit annähernd eine flache Scheibe aus und dient der Festlegung des Kerns 3 im äußeren Hohlprofil 1. Der Basiskörper 6 weist ein Durchgangsloch 7 auf, das insbesondere zum Abfluss von Flüssigkeiten des Bauteils dient. Somit können Flüssigkeiten, die zum Beispiel durch eine kathodische Taulackierung eingebracht wurden, vor, während und nach der Herstellung der Klebeverbindung abfließen.

Der Kern 3 weist zudem einen Hals 10 auf, dessen Durchmesser geringer ist als der Innendurchmesser des zweiten Hohlprofils 2. Der Hals 10 verläuft zu den Innenseiten des zweiten Hohlprofils 2 parallel. Erstes Hohlprofil 1, zweites Hohlprofil 2 und Kern 3, beziehungsweise der Hals 10 des Kerns 3, bilden somit voneinander beabstandete konzentrische Kreise, wobei jeweils Zwischenräume zwischen diesen Kreisen durch expandierte Strukturkleber 4 aufgefüllt werden (Fig. 2 unten).

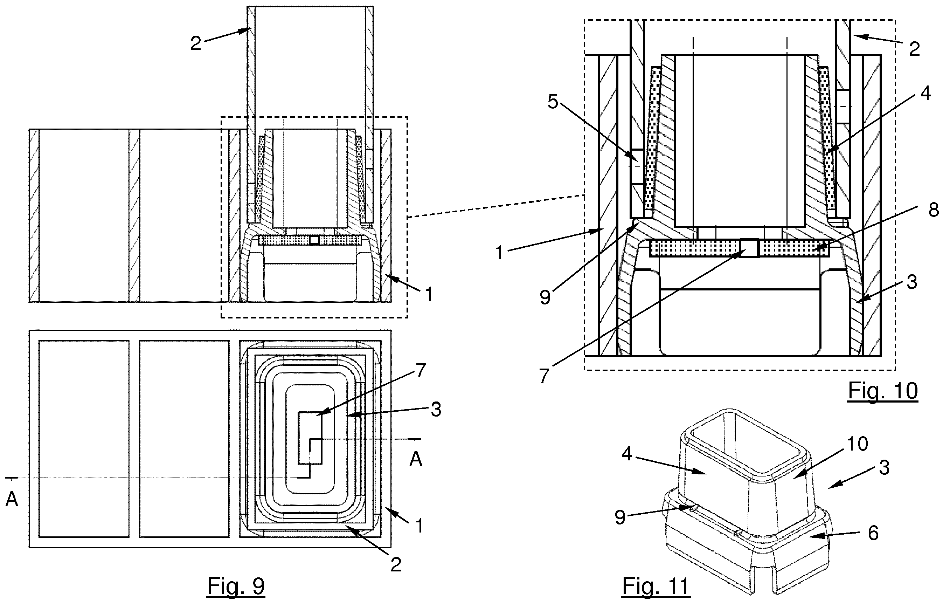

Der Basiskörper 6 des Kerns 3 weist Abstandsnasen 9 auf um einen vorbestimmten vertikalen Abstand zwischen dem zweiten Hohlprofil 2 und dem Basiskörper 6 sicherzustellen, der ebenfalls mit Strukturkleber 4 aufgefüllt werden kann. Die Lage der Abstandsnasen ist besonders gut in Fig. 11 ersichtlich.

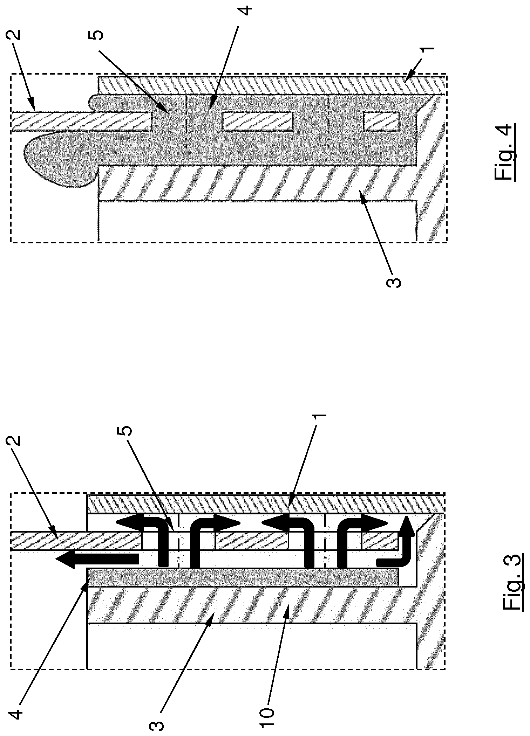

In Fig. 3 ist durch Pfeile dargestellt, wie der expandierende Strukturkleber 4 durch die Bohrungen 5 in den Zwischenraum zwischen zweitem Hohlprofil 2 und erstem Hohlprofil 1 gelangt und diesen ausfüllt (Fig. 4).

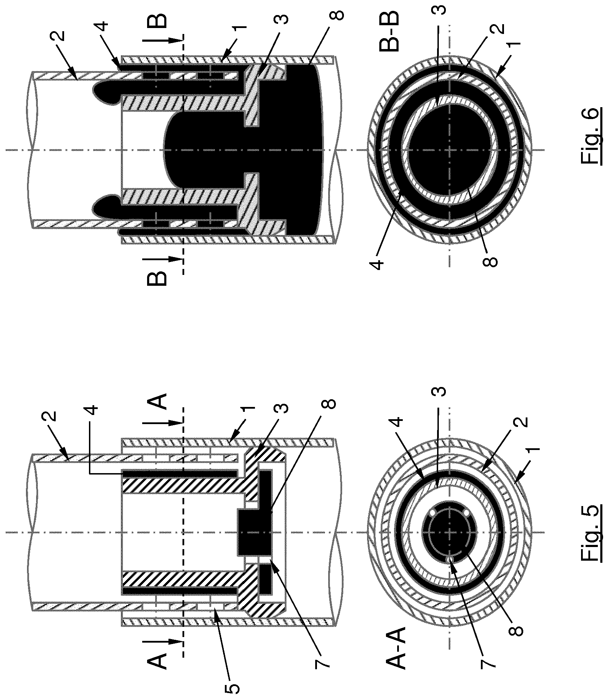

In der in Fig. 5 und Fig. 6 dargestellten Variante der Erfindung ist am Basiskörper 6 des Kerns 3 ein Blähschaum 8 angeordnet. Der ursprünglich auf der Unterseite des Basiskörpers angebrachte Blähschaum 8 tritt bei dessen Expansion durch eine zentrale Öffnung des Basiskörpers 6 und erstreckt sich auf die Oberseite des Basiskörpers 6. Der Blähschaum 8 liegt sowohl am Kern 3 als auch an der Innenseite des ersten Hohlprofils 1 an. Der Blähschaum 8 verschließt im expandierten Zustand auch das Durchgangsloch im Basiskörper 6.

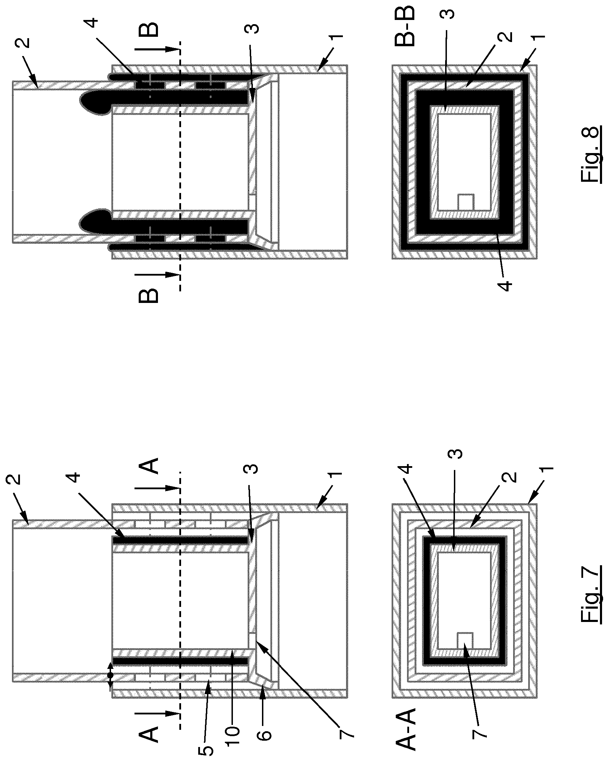

Fig. 7 und 8 zeigen eine erfindungsgemäße Ausführungsform mit rechteckigen Profilen sowohl des ersten Hohlprofils 1 als auch des zweiten Hohlprofils 2 und des Halses 10 des Kerns 3.

Fig. 9 ist eine weitere Variante einer erfindungsgemäßen Klebeverbindung, wobei das erste Hohlprofil 1 Teil eines umfassenden Bauteils ist, das mehrere Schächte ausbildet. Der Kern 3 bzw. dessen Basisfläche 6 weist sich nach unten erstreckende Fortsätze auf, die an den Innenseiten des ersten Hohlprofils 1 anliegen. Der Kern, mit aufgebrachtem Strukturkleber 4, ist in Fig. 11 dreidimensional dargestellt.

### Bezugszeichenliste

- 1: erstes Hohlprofil
- 2: zweites Hohlprofil
- 3: Kern
- 4: Strukturkleber
- 5: Bohrung
- 6: Basiskörper
- 7: Durchgangsloch
- 8: Blähschaum
- 9: Abstandsnase
- 10: Hals

## Patentansprüche

1. Steck- und Klebeverbindung eines ersten Hohlprofils (1) mit einem zweiten gleichachsigen Hohlprofil (2), wobei das zweite Hohlprofil (2) in einem Überlappungsbereich der Steckverbindung vom ersten Hohlprofil (1) umgeben ist,
wobei im Überlappungsbereich, innerhalb des ersten Hohlprofils (1) und des zweiten Hohlprofils (2), ein mit dem ersten Hohlprofil (1) verbundener Kern (3) angeordnet ist, wobei der Kern (3) einen Hals (10) aufweist, wobei der Durchmesser des Halses (10) geringer ist als der Innendurchmesser des zweiten Hohlprofils (2), wobei das erste Hohlprofil (1) und das zweite Hohlprofil (2) und der Hals (10) des Kerns (3) das selbe Profil aufweisen, insbesondere ein rundes, rechteckiges oder quadratisches Profil,
**dadurch gekennzeichnet, dass** zunächst nur zwischen dem Kern (3) und der Innenseite des zweiten Hohlprofils (2) ein expandierender Strukturkleber (4) angeordnet ist, wobei das zweite Hohlprofil (2) im Überlappungsbereich Bohrungen (5) aufweist und der expandierende Strukturkleber (4) durch die Bohrungen (5) gequollen ist, so, dass der expandierende Strukturkleber (4) die Innenseite des ersten Hohlprofils (1) kontaktiert.

2. Steck- und Klebeverbindung nach Anspruch 1,
**dadurch gekennzeichnet, dass** der Kern (3) einen Basiskörper (6) aufweist, wobei der Durchmesser des Basiskörpers (6) dem Innendurchmesser des ersten Hohlprofils (1) entspricht.

3. Steck- und Klebeverbindung nach Anspruch 2,
**dadurch gekennzeichnet, dass** der Basiskörper (6) ein Durchgangsloch (7) zum Abfluss von Flüssigkeiten aufweist.

4. Steck- und Klebeverbindung nach Anspruch 3,
**dadurch gekennzeichnet, dass** am Basiskörper (6) des Kerns (3) ein Blähschaum (8) angeordnet ist, wobei der Blähschaum (8) insbesondere das Durchgangsloch (7) im Basiskörper (6) verschließt.

5. Steck- und Klebeverbindung nach zumindest einem der Ansprüche 2 bis 4,
**dadurch gekennzeichnet, dass** der Basiskörper (6) Abstandsnasen (9) aufweist um einen vorbestimmten vertikalen Abstand zwischen dem zweiten Hohlprofil (2) und dem Basiskörper (6) sicherzustellen, also einen Abstand normal auf die Fläche des Basiskörpers (6).

6. Steck- und Klebeverbindung nach Anspruch 1,
**dadurch gekennzeichnet, dass** der Hals (10) zu den Innenseiten des zweiten Hohlprofils (2) parallel verläuft oder sich konisch verjüngt.

7. Steck- und Klebeverfahren zur Herstellung einer Steck- und Klebeverbindung zwischen einem ersten Hohlprofil (1) und einem zweiten gleichachsigen Hohlprofil (2), wobei das zweite Hohlprofil (2) in einem Überlappungsbereich der Steckverbindung vom ersten Hohlprofil (1) umgeben ist, wobei ein Kern (3) einen Hals (10) aufweist, wobei der Durchmesser des Halses (10) geringer ist als der Innendurchmesser des zweiten Hohlprofils (2), wobei das erste Hohlprofil (1) und das zweite Hohlprofil (2) und der Hals (10) des Kerns (3) das selbe Profil aufweisen, insbesondere ein rundes, rechteckiges oder quadratisches Profil,
**dadurch gekennzeichnet, dass** auf der Außenseite des Kerns (3) ein expandierender Strukturkleber (4) aufgebracht wird, danach der Kern (3) im ersten Hohlprofil (1) zumindest temporär befestigt wird, danach das zweite Hohlprofil (2) in einen freien Schacht zwischen Kern (3) und erstem Hohlprofil (1) angeordnet wird und danach der expandierende Strukturkleber (4) expandiert wird, wobei das zweite Hohlprofil (2) im Überlappungsbereich Bohrungen (5) aufweist und der expandierende Strukturkleber (4) beim Expandieren durch die Bohrungen (5) quillt, so, dass der expandierende Strukturkleber (4) die Innenseite des ersten Hohlprofils (1) kontaktiert, so dass der Kern (3) und das zweite Hohlprofil (2) stoffschlüssig und kraftschlüssig miteinander verbunden werden.

8. Steck- und Klebeverfahren nach Anspruch 7,
**dadurch gekennzeichnet, dass** der expandierende Strukturkleber (4) mittels eines thermischen Vorganges oder einer chemischen Reaktion expandiert wird.

9. Steck- und Klebeverfahren nach zumindest einem der Ansprüche 7 bis 8,
**dadurch gekennzeichnet, dass** nach dem Anordnen des Kerns (3) im ersten Hohlprofil (1) und vor dem Expandieren des expandierenden Strukturklebers (4) eine kathodische Tauchlackierung durchgeführt wird.

10. Steck- und Klebeverfahren nach zumindest einem der Ansprüche 7 bis 9,
**dadurch gekennzeichnet, dass** der Kern (3) einen Basiskörper (6) aufweist, wobei der Durchmesser des Basiskörpers (6) dem Innendurchmesser des ersten Hohlprofils (1) entspricht und am Basiskörper (6) ein Blähschaum (8) aufgebracht wird und der Blähschaum (8) nach Anordnung des Kerns (3) im ersten Hohlprofil (1) expandiert wird.

## Claims

1. Plug-in and bonded connection of a first hollow profile (1) to a second, coaxial hollow profile (2), wherein the second hollow profile (2) is surrounded in an overlapping region of the plug-in connection by the first hollow profile (1), wherein a core (3) connected to the first hollow profile (1) is arranged in the overlapping region inside the first hollow profile (1) and the second hollow profile (2), wherein the core (3) has a neck (10), wherein the diameter of the neck (10) is smaller than the internal diameter of the second hollow profile (2), wherein the first hollow profile (1) and the second hollow profile (2) and the neck (10) of the core (3) have the same profile, in particular a round, rectangular or square profile, **characterized in that** an expanding structural adhesive (4) is arranged firstly only between the core (3) and the inner face of the second hollow profile (2), wherein the second hollow profile (2) has bores (5) in the overlapping region and the expanding structural adhesive (4) swells up through the bores (5), so that the expanding structural adhesive (4) comes into contact with the inner face of the first hollow profile (1).

2. Plug-in and bonded connection according to Claim 1, **characterized in that** the core (3) has a base body (6), wherein the diameter of the base body (6) corresponds to the internal diameter of the first hollow profile (1).

3. Plug-in and bonded connection according to Claim 2,
**characterized in that** the base body (6) has a through-hole (7) for the drainage of liquids.

4. Plug-in and bonded connection according to Claim 3, **characterized in that** an expanding foam (8) is arranged on the base body (6) of the core (3), wherein the expanding foam (8), in particular, seals the through-hole (7) in the base body (6).

5. Plug-in and bonded connection according to at least one of Claims 2 to 4, **characterized in that** the base body (6) has spacer lugs (9) in order to ensure a predetermined vertical spacing between the second hollow profile (2) and the base body (6), that is to say a spacing normal to the surface of the base body (6).

6. Plug-in and bonded connection according to Claim 1, **characterized in that** the neck (10) extends parallel to the inner faces of the second hollow profile (2) or tapers in a conical manner.

7. Plug-in and bonding method for producing a plug-in and bonded connection between a first hollow profile (1) and a second, coaxial hollow profile (2), wherein the second hollow profile (2) is surrounded in an overlapping region of the plug-in connection by the first hollow profile (1), wherein a core (3) has a neck (10), wherein the diameter of the neck (10) is smaller than the internal diameter of the second hollow profile (2), wherein the first hollow profile (1) and the second hollow profile (2) and the neck (10) of the core (3) have the same profile, in particular a round, rectangular or square profile, **characterized in that** an expanding structural adhesive (4) is applied to the outer face of the core (3), subsequently the core (3) is at least temporarily fastened in the first hollow profile (1), subsequently the second hollow profile (2) is arranged in a free channel between the core (3) and the first hollow profile (1) and subsequently the expanding structural adhesive (4) is expanded, wherein the second hollow profile (2) has bores (5) in the overlapping region and the expanding structural adhesive (4) swells up through the bores (5) during expansion, so that the expanding structural adhesive (4) comes into contact with the inner face of the first hollow profile (1), so that the core (3) and the second hollow profile (2) are connected together by a material and non-positive connection.

8. Plug-in and bonding method according to Claim 7, **characterized in that** the expanding structural adhesive (4) is expanded by means of a thermal process or a chemical reaction.

9. Plug-in and bonding method according to at least one of Claims 7 to 8, **characterized in that** cathodic dip coating is carried out after arranging the core (3) in the first hollow profile (1) and before the expansion of the expanding structural adhesive (4).

10. Plug-in and bonding method according to at least one of Claims 7 to 9, **characterized in that** the core (3) has a base body (6), wherein the diameter of the base body (6) corresponds to the internal diameter of the first hollow profile (1) and an expanding foam (8) is applied to the base body (6) and the expanding foam (8) is expanded after arranging the core (3) in the first hollow profile (1) .

## Revendications

1. Liaison enfichable et adhésive d'un premier profilé creux (1) avec un deuxième profilé creux (2) de même axe, dans laquelle le deuxième profilé creux (2) est entouré par le premier profilé creux (1) dans une région de chevauchement de la liaison enfichable,
dans laquelle un noyau (3) assemblé au premier profilé creux (1) est disposé dans la région de chevauchement, à l'intérieur du premier profilé creux (1) et du deuxième profilé creux (2), dans laquelle le noyau (3) présente un col (10), dans laquelle le diamètre du col (10) est plus petit que le diamètre intérieur du deuxième profilé creux (2), dans laquelle le premier profilé creux (1) et le deuxième profilé creux (2) et le col (10) du noyau (3) présentent le même profil, en particulier un profil rond, rectangulaire ou carré,
**caractérisée en ce qu'**une colle de structure dilatable (4) est d'abord disposée uniquement entre le noyau (3) et le côté intérieur du deuxième profilé creux (2), dans laquelle le deuxième profilé creux (2) présente des trous (5) dans la région de chevauchement et la colle de structure dilatable (4) est dilatée à travers les trous (5), de telle manière que la colle de structure dilatable (4) soit en contact avec le côté intérieur du premier profilé creux (1).

2. Liaison enfichable et adhésive selon la revendication 1, **caractérisée en ce que** le noyau (3) présente un corps de base (6), dans laquelle le diamètre du corps de base (6) correspond au diamètre intérieur du premier profilé creux (1).

3. Liaison enfichable et adhésive selon la revendication 2, **caractérisée en ce que** le corps de base (6) présente un trou de passage (7) pour l'écoulement de liquides.

4. Liaison enfichable et adhésive selon la revendication 3, **caractérisée en ce qu'**une mousse expansible (8) est disposée sur le corps de base (6) du noyau (3), dans laquelle la mousse expansible (8) obture en particulier le trou de passage (7) dans le corps de base (6).

5. Liaison enfichable et adhésive selon au moins une des revendications 2 à 4, **caractérisée en ce que** le corps de base (6) présente des ergots d'écartement (9) afin de garantir une distance verticale prédéterminée entre le deuxième profilé creux (2) et le corps de base (6), donc une distance normale à la face du corps de base (6).

6. Liaison enfichable et adhésive selon la revendication 1, **caractérisée en ce que** le col (10) s'étend parallèlement ou s'amincit en cône par rapport aux côtés intérieurs du deuxième profilé creux (2).

7. Procédé d'enfichage et de collage pour la fabrication d'une liaison enfichable et adhésive entre un premier profilé creux (1) et un deuxième profilé creux (2), dans lequel le deuxième profilé creux (2) est entouré par le premier profilé creux (1) dans une région de chevauchement de la liaison enfichable, dans lequel le noyau (3) présente un col (10), dans lequel le diamètre du col (10) est plus petit que le diamètre intérieur du deuxième profilé creux (2), dans lequel le premier profilé creux (1) et le deuxième profilé creux (2) et le col (10) du noyau (3) présentent le même profil, en particulier un profil rond, rectangulaire ou carré, **caractérisé en ce que** l'on dépose une colle de structure dilatable (4) sur le côté extérieur du noyau (3), puis on fixe au moins temporairement le noyau (3) dans le premier profilé creux (1), on dispose ensuite le deuxième profilé creux (2) dans un puits libre entre le noyau (3) et le premier profilé creux (1), puis on dilate la colle de structure dilatable (4), dans lequel le deuxième profilé creux (2) présente des trous (5) dans la région de chevauchement et la colle de structure dilatable (4) se dilate à travers les trous (5) lors de la dilatation, de telle manière que la colle de structure dilatable (4) soit en contact avec le côté intérieur du premier profilé creux (1), de telle manière que le noyau (3) et le deuxième profilé creux (2) soient assemblés l'un à l'autre matériellement et par adhérence.

8. Procédé d'enfichage et de collage selon la revendication 7, **caractérisé en ce que** l'on dilate la colle de structure dilatable (4) au moyen d'une opération thermique ou d'une réaction chimique.

9. Procédé d'enfichage et de collage selon au moins une des revendications 7 à 8, **caractérisé en ce que** l'on effectue un laquage cathodique au trempé après la mise en place du noyau (3) dans le premier profilé creux (1) et avant la dilatation de la colle de structure dilatable (4) .

10. Procédé d'enfichage et de collage selon au moins une des revendications 7 à 9, **caractérisé en ce que** le noyau (3) présente un corps de base (6), dans lequel le diamètre du corps de base (6) correspond au diamètre intérieur du premier profilé creux (1) et on dépose une mousse expansible (8) sur le corps de base (6) et on provoque l'expansion de la mousse expansible (8) après la mise en place du noyau (3) dans le premier profilé creux (1).
